# EUROPÄISCHE PATENTANMELDUNG

(11) **EP 1 248 102 A1**
(43) Veröffentlichungstag der Anmeldung: **09.10.2002**
(21) Anmeldenummer: 02400022.6
(22) Anmeldetag: 26.03.2002
(51) Int. Cl.: G01N 27/416, G01N 27/28, G01N 27/38

(54) **Mess-, Reinigungs- und Kalibriereinrichtung für ph-Elektroden oder Elektroden zur Messung von Redoxpotentialen**

(30) Priorität: 03.04.2001 DE 10116614
(71) Anmelder: Endress + Hauser Conducta Gesellschaft für Mess- und Regeltechnik mbH + Co., D-70839 Gerlingen (DE)
(72) Erfinder: Könemann, Ralf, 70499 Stuttgart (DE); Beck, Bernhard, 70563 Stuttgart (DE); Wittmer, Detlev, 75433 Maulbronn (DE)
(74) Vertreter: Friz, Oliver

(57) **Zusammenfassung**

Die Erfindung betrifft eine automatisierbare Meß-, Reinigungs- und Kalibriereinrichtung für pH-Elektroden oder Elektroden zur Messung von Redoxpotentialen, insbesondere in der Prozeßtechnik, mit einer Elektrodenarmatur (4), welche die Meßelektrode (2) in einer Betriebsposition oder in einer Wartungsposition hält, wobei die Elektrode (2) in der Wartungsposition in einer Spülkammer (28) aufgenommen ist, in welcher ein Reinigungs- und Kalibriervorgang durchführbar ist, und mit einer Pumpvorrichtung (12) zum Zuführen von Reinigungsflüssigkeit (16) und Kalibrierlösungen (18, 20) zur Spülkammer (28) über eine die Pumpvorrichtung (12) und die Spülkammer (28) verbindende Förderleitung (26); um die Einrichtung kompakter auszubilden, umfasst die Pumpvorrichtung (12) mehrere Zuführungen (48) auf ihrer Ansaugseite, und es ist eine Einrichtung (76) zum selektiven Ansteuern einer jeweiligen Zuführung (48) vorgesehen, und die über die jeweiligen Zuführungen (48) selektiv zur Pumpvorrichtung (12) geleiteten Medien (Reinigungsflüssigkeit, Kalibrierlösung, etc) gelangen über die gemeinsame Förderleitung (26) zur Spülkammer (28).

## Beschreibung

Die Erfindung betrifft eine automatisierbare Meß-, Reinigungs- und Kalibriereinrichtung für pH-Elektroden oder Elektroden zur Messung von Redoxpotentialen, insbesondere in der Prozeßtechnik, mit einer Elektrodenarmatur, welche die Meßelektrode in einer Betriebsposition oder in einer Wartungsposition hält, wobei die Elektrode in der Wartungsposition in einer Spülkammer aufgenommen ist, in welcher ein Reinigungs- und Kalibriervorgang durchführbar ist, und mit einer Pumpvorrichtung zum Zuführen von Reinigungsflüssigkeit und Kalibrierlösungen zur Spülkammer über eine die Pumpvorrichtung und die Spülkammer verbindende Förderleitung.

Elektrochemische Sensoren und deren Elektroden sind bedingt durch Einflüsse wie Temperatur, Art und Konzentration der Ionen im Prüfmedium, Verschmutzung sowie Alterung bezüglich ihrer Meßcharakteristik nur bedingt konstant und sollten deshalb je nach Anwendungsfall in entsprechenden zeitlichen Abständen gereinigt und mittels standardisierter Kalibrierlösungen überprüft werden. Bei einer solchen Überprüfung werden Sensorparameter wie Nullpunkt und Steilheit der Sensorkurve meßtechnisch erfaßt und in der zugehörigen Meß- und Auswerteeinrichtung gespeichert und beim Betrieb des Sensors berücksichtigt.

Eine Elektrodenarmatur für eine Meß-, Reinigungs- und Kalibriereinrichtung ist beispielsweise in DE 39 27 282 A beschrieben. Mit einer solchen Elektrodenarmatur kann beispielsweise eine pH-Elektrode aus ihrer Betriebsposition in einem Prozeßbehälter herausgefahren und in eine Wartungsposition in einer Spülkammer verbracht werden, wo sie mit Reinigungs- und Kalibrierlösungen beaufschlagt wird.

Man ist des weiteren bestrebt, diesen Vorgang der Reinigung und Kalibrierung, der nachfolgend als Wartung bezeichnet wird, zu automatisieren. Hierfür ist es bekannt, Reinigungsflüssigkeiten und Kalibrierlösungen über Pumpvorrichtungen zu der Spülkammer der Meß-, Reinigungsund Kalibriereinrichtung zuzuführen. Man verwendet hierfür je zuzuführendem Medium eine eigene Pumpvorrichtung.

Der vorliegenden Erfindung liegt die Aufgabe zugrunde, eine automatisierbare Meß-, Reinigungs- und Kalibriereinrichtung der eingangs genannten Art kompakter auszubilden.

Diese Aufgabe wird bei einer Einrichtung mit den Merkmalen des Oberbegriffs des Anspruchs 1 erfindungsgemäß dadurch gelöst, dass die Pumpvorrichtung mehrere Zuführungen auf ihrer Ansaugseite umfaßt, dass eine Einrichtung zum selektiven Ansteuern einer jeweiligen Zuführung vorgesehen ist und dass die über die jeweiligen Zuführungen selektiv zur Pumpvorrichtung geleiteten Medien, also Reinigungsflüssigkeit, Kalibrierlösungen oder Spülwasser, über die gemeinsame Förderleitung zur Spülkammer gelangen.

Mit der vorliegenden Erfindung wird also vorgeschlagen, insbesondere nur eine einzige Pumpvorrichtung zu verwenden, die dann mit mehreren Zuführungen, also beispielsweise mit mehreren Zuführleitungen verbunden ist, die ihrerseits mit verschiedenen unmittelbar an der Einrichtung oder auch an entfernter Stelle vorgesehenen Aufnahmebehältern für verschiedene Kalibrierlösungen und für verschiedene Reinigungs- oder Spüllösungen verbunden sind. Durch die Einrichtung zum selektiven Ansteuern einer jeweiligen Zuführung kann dann entsprechend dem vorgewählten Reinigungs- und Kalibrierzyklus die gerade gewünschte Zuführung angesteuert werden, so dass die betreffende Reinigungsflüssigkeit über die Pumpvorrichtung zu der Spülkammer gefördert werden kann.

Der Reinigungs- und Kalibrierablauf ist so gestaltet, dass abwechselnd Reinigungsflüssigkeiten und Kalibrierlösungen, aber auch Spüllösungen und gegebenenfalls Druckluft, in die Spülkammer zu fördern sind, um den Sensor bzw. dessen pHoder Redox-Elektrode zu warten.

Ein typischer Reinigungs- und Kalibrierzyklus für eine pH-Meßelektrode könnte folgendermaßen ablaufen: Zunächst wird die aus der Betriebs- in die Wartungsposition verlagerte Meßelektrode mit Wasser vorgespült. Daran schließt sich ein Reinigungsvorgang durch Spülen der Spülkammer mit Reinigungslösung an. Es wird sodann mit Wasser nachgespült. Die Spülkammer wird dann mittels Druckluft freigeblasen. Es wird eine erste Kalibrierlösung in Form einer pHgepufferten ersten Lösung eingebracht und die entsprechenden Werte des Sensors werden ermittelt, meßtechnisch verarbeitet und gespeichert. Es erfolgt eine Nachspülung mit Wasser, gefolgt von einem weiteren Freiblasen mittels Luft. Dann wird eine zweite Kalibrierlösung unter Aufnahme der Sensorsignale eingeleitet und danach mit Wasser und anschließend mit Luft gespült.

Es wird darauf hingewiesen, dass die Betriebsposition und die Wartungsposition des Sensors nicht notwendigerweise - wie bei einer Wechselarmatur üblich - voneinander verschieden, also beispielsweise innerhalb oder außerhalb eines Prozeßbehälters angeordnet sein müssen, sondern dass es zumindest grundsätzlich auch denkbar wäre, dass zur Bildung einer Spülkammer unter Beibehaltung der Position der Meßelektrode teleskopierende Gehäusekomponenten oder dergleichen, welche einen Abschluß gegen den Prozeß bilden, vorgesehen werden könnten.

Es erweist sich in jedem Fall als vorteilhaft, wenn nur eine einzige Pumpvorrichtung vorgesehen ist, die dann die mehreren Zuführungen, und zwar ein erstes Leitungsmittel zum Zuführen einer Reinigungsflüssigkeit und ein zweites und ein drittes Leitungsmittel zum Zuführen einer ersten und einer zweiten Kalibrierlösung, umfaßt.

Des weiteren erweist es sich als vorteilhaft, wenn die Pumpvorrichtung eine Dosierpumpvorrichtung ist, mit der definierte Mengen zur Spülkammer zuführbar sind. Dies erweist sich insbesondere im Hinblick auf die Kalibrierlösungen als vorteilhaft, die aus Kostengründen nur in der erforderlichen Menge verbraucht werden sollten.

Die Pumpvorrichtung könnte umfangreiche, mit einer Vielzahl von ansteuerbaren Ventilen versehene Ansaugkanäle umfassen. In Weiterbildung der Erfindung wird aber vorgeschlagen, dass die Pumpvorrichtung ein erstes, mit den mehreren Zuführungen verbindbares Bauteil umfaßt, welches je Zuführung eine Öffnung aufweist, welche Öffnungen selektiv mit insbesondere einem einzigen Ansaugkanal der Pumpvorrichtung verbindbar sind.

Hierfür wird weiter vorgeschlagen, dass die Einrichtung zum selektiven Ansteuern einer jeweiligen Zuführung ein gegenüber dem ersten Bauteil verstellbares zweites Bauteil aufweist, welches den Ansaugkanal umfaßt, und dass das erste und das zweite Bauteil derart gegeneinander verstellbar sind, dass eine Ansaugöffnung des Ansaugkanals selektiv mit einer jeweiligen Zuführung verbindbar ist. Die beiden Bauteile werden also derart gegeneinander verstellt, insbesondere verdeht, dass ein Öffnungsquerschnitt der beiderseitigen Öffnungen miteinander kommuniziert, um so eine Fluidverbindung zwischen einer jeweiligen Zuführung und dem Ansaugkanal der Pumpvorrichtung herzustellen.

Um Leitungsmittel der mehreren Zuführungen ortsfest vorsehen zu können, erweist es sich als vorteilhaft, wenn das erste Bauteil, welches mit diesen Zuführungen verbunden ist, ein feststehendes Bauteil ist. Obschon dies nicht zwingend erforderlich ist, da auch flexible Leitungsmittel bei den Zuführungen verwendet werden können. Demgemäß erweist es sich als vorteilhaft, wenn das zweite Bauteil ein gegenüber dem ersten feststehenden Bauteil bewegbares Stellteil ist. Die beiden Bauteile sind erfindungsgemäß gegeneinander verdrehbar, so dass durch diese Verdrehung die selektive Ansteuerung der jeweiligen Zuführungen erreicht wird.

In weiterer Ausbildung der Erfindung ist der Ansaugkanal, der in dem zweiten Bauteil ausgebildet ist, gegenüber einer Drehachse geneigt. Er verläuft vorzugsweise nach radial innen, ist dabei aber geneigt. Dies schafft im Bereich der Ansaugöffnung des Ansaugkanals freien Bauraum innerhalb des zweiten Bauteils, in welchem Steuereinrichtungen, insbesondere Ventilbetätigungseinrichtungen, die nachfolgend noch beschrieben werden, untergebracht werden können.

Zur selektiven Ansteuerung der Zuführungen weisen das erste und das zweite Bauteil insbesondere und vorzugsweise flanschförmige, gegeneinander anliegende und insbesondere gegeneinander verdrehbare Kontaktflächen auf, in denen die Öffnungen des ersten Bauteils und die Ansaugöffnungen des zweiten Bauteils münden und miteinander kommunizieren. Um die beiden Bauteile gegeneinander zu verdrehen, ist eine Stelleinrichtung vorgesehen, die vorzugsweise rechnergesteuert ist.

Die Stelleinrichtung umfaßt bei einer bevorzugten Ausführungsform der Erfindung ein linear bewegbares Stellmittel, wobei dessen Stellbewegung insbesondere etwa tangential zum Drehkreis des einen Bauteils verläuft und dieses um eine oder mehrere Drehstellungen weiterstellt.

Im Hinblick auf eine Automatisierung erweist es sich als vorteilhaft, wenn die Einrichtung zum selektiven Ansteuern einer jeweiligen Zuführung des weiteren eine Positionskontrollvorrichtung umfaßt, mit der die Stellung des ersten und zweiten Bauteils zueinander bestimmbar ist. Es läßt sich auf diese Weise beispielsweise das Stellmittel so lange verfahren, bis die Positionskontrollvorrichtung das Erreichen der nächstfolgenden Ansteuerungsposition der betreffenden Zuführung meldet.

Zur Verwirklichung der selektiven Ansteuerung der mehreren Zuführungen wäre es beispielsweise denkbar, dass die beiden Bauteile hinreichend dichtend gegeneinander bewegbar sind. Es erweist sich indessen als vorteilhaft, sicherer und konstruktiv weniger aufwendig erreichbar, wenn die Öffnungen des ersten Bauteils jeweils von in Schließrichtung vorgespannten Ventilen verschließbar sind, die dann öffenbar sind, wenn die betreffende Zuführung angesteuert wird.

Es wird vorgeschlagen, dass die Ventile Ventilkörper umfassen, die entgegen der Zuführrichtung von einem Ventilsitz abhebbar sind, wenn die betreffende Zuführung angesteuert wird.

Das Abheben der Ventilkörper könnte an sich in beliebiger Weise, etwa elektromagnetisch, erfolgen. Es erweist sich indessen als vorteilhaft, wenn in dem zweiten Bauteil im Bereich der Ansaugöffnung des Ansaugkanals eine Stösseleinrichtung vorgesehen ist, welche den Ventilkörper von seinem Ventilsitz abhebt. Die Stösseleinrichtung kann beispielsweise und vorzugsweise im Bereich oberhalb d. h. axial hinter der Ansaugöffnung vorgesehen sein, insbesondere dann, wenn der Ansaugkanal schräg geneigt nach radial innen verläuft - wie vorstehend bereits angedeutet wurde. Die Stösseleinrichtung ist vorzugsweise in Form eines Kolbens mit Stösselstange ausgebildet, deren freies Ende sich vorzugsweise durch und über die Ansaugöffnung hinaus in Richtung auf das erste Bauteil erstreckt. Das freie Ende der Stösselstange kann dann in die Öffnung in dem ersten Bauteil eindringen und den Ventilkörper von seinem Ventilsitz abheben. Hierfür ist der Stösselkolben vorzugsweise in der entgegengesetzten Richtung vorgespannt, so dass sein freies Ende im nicht betätigten Zustand nicht über die Anlagefläche des zweiten Bauteils vorsteht. Wenn bei entsprechender Stellung des ersten und des zweiten Bauteils zueinander eine Zuführung angesteuert werden soll, kann der Stösselkolben entgegen der Vorspannung, insbesondere und vorzugsweise pneumatisch, verstellt werden, so dass er das Ventil öffnet und eine Strömungskommunikation zwischen dem Ansaugkanal und der betreffenden Zuführung herstellt, so dass im anschließenden Saughub der Pumpvorrichtung eine vorzugsweise vorbestimmte Menge von Flüssigkeit angesaugt werden kann.

Nach einer bevorzugten Ausführungsform der Erfindung verläuft der Ansaugkanal im wesentlichen nach radial innen und mündet dort in eine Zylinderkammer, in der ein Ansaugund Verdrängerkolben bewegbar ist. Während des Ansaughubs muß eine ausgewählte betreffende Zuführung mit der Ansaugöffnung des Ansaugkanals kommunizieren, so dass ein vorzugsweise vorbestimmtes Volumen von Fördermedium, also Reinigungsflüssigkeit oder Kalibrierlösung oder Spülflüssigkeit, in die Zylinderkammer gesogen wird. Beim anschließenden Verdrängungshub ist ein in der Zuführung vorzugsweise vorgesehenes Rückschlagventil geschlossen. Ferner wird dann die vorstehend erwähnte, gegebenenfalls vorgesehene Stösseleinrichtung derart angesteuert, dass das Ventil in der Öffnung des ersten Bauteils diese Öffnung wieder verschließt. Wenn aber zusätzlich noch das erwähnte Rückschlagventil vorgesehen ist, so braucht die Vorspannung dieses Ventils nicht allzu groß eingestellt zu werden.

Der Ansaug- und Verdrängerkolben der Pumpvorrichtung ist vorzugsweise über ein Kolbenstangenmittel mit einem in einem vorzugsweise pneumatischen Steuerzylinder bewegbaren Steuerkolben antriebsverbunden. Dieser Steuerkolben ist nach einer bevorzugten Ausführungsform in einer Richtung, vorzugsweise in Verdrängerrichtung des Ansaug- und Verdrängerkolbens, federvorgespannt. Dies bedeutet, dass nur ein einziger pneumatischer Steueranschluß vorgesehen werden muß, mit dem dann der Kolben in Ansaugrichtung bewegt wird. Der anschließende Verdrängerhub erfolgt durch Federvorspannung des Steuerkolbens. Die Pumpvorrichtung ist daher durch getaktete Druckluftstöße mit vorbestimmbarer Kolbenhubfrequenz und damit vorbestimmbarem Fördervolumen antreibbar. Mit exakt demselben Takt wird die erwähnte Stösseleinrichtung angetrieben, was die konstruktive Verwirklichung der Pumpvorrichtung weiter vereinfacht.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform der Erfindung.

In der Zeichnung zeigt:
- Figur 1: eine schematische Darstellung der erfindungsgemäßen Meß-, Reinigungs- und Kalibriereinrichtung;
- Figur 2: eine Ansicht einer Steuereinheit der Einrichtung nach Figur 1 mit einer Pumpvorrichtung;
- Figur 3: eine Längsschnittansicht der in Figur 2 dargestellten Pumpvorrichtung;
- Figur 4: eine Seitenansicht der Pumpvorrichtung nach Figur 3 und
- Figur 5: eine perspektivische Ansicht der Pumpvorrichtung nach Figur 3 und 4.

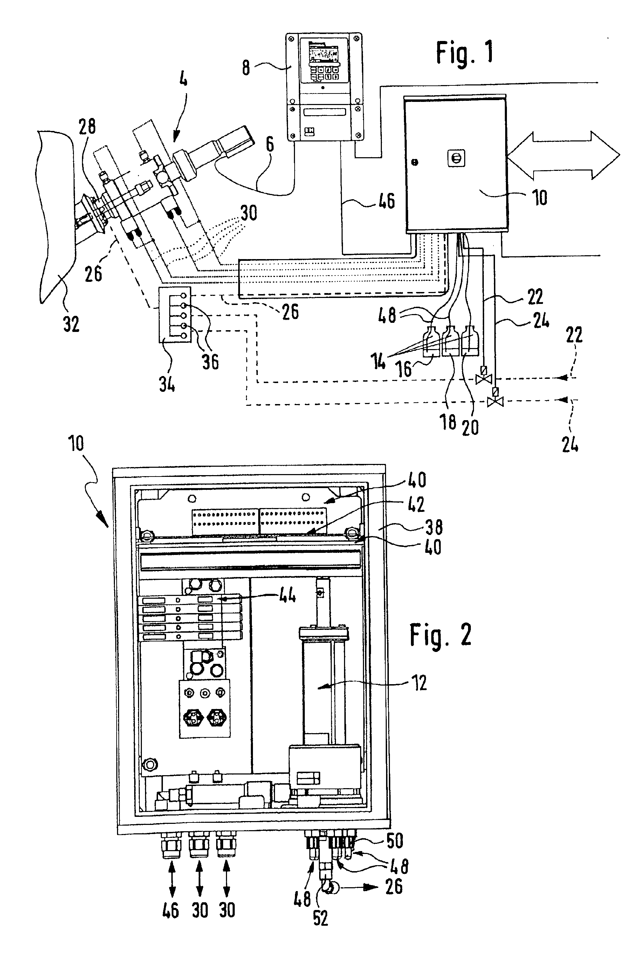

Figur 1 zeigt eine schematische Darstellung einer automatisierbaren Meß-, Reinigungs- und Kalibriereinrichtung für pH-Elektroden 2 oder Elektroden 2 zur Messung von Redoxpotentialen. Die Elektrode 2 ist dabei in einer Elektrodenarmatur 4, einer sogenannten "Wechselarmatur" gehalten und über ein Elektrodenkabel 6 mit einem rechnergesteuerten oder einen Prozeßrechner umfassenden Meßumformer 8 verbunden. Ferner dargestellt ist eine Steuereinheit 10 mit einer aus den Figuren 2 bis 5 ersichtlichen Pumpvorrichtung 12. Auf noch näher zu beschreibende Weise fördert die als Dosierpumpvorrichtung ausgebildete Pumpvorrichtung 12 aus Vorratsbehältern 14 eine Reinigungsflüssigkeit 16, eine erste und eine zweite Kalibrierlösung 18, 20, unter Druck stehendes Wasser 22 sowie Druckluft 24 über eine gemeinsame Förderleitung 26 in eine Spülkammer 28 der Elektrodenarmatur 4.

Des weiteren führen von der Steuereinheit 10 pneumatische Steuerleitungen 30 zu der Elektrodenarmatur 4, um die Elektrode aus bzw. in eine Betriebsposition im Inneren eines Prozeßbehälters 32 bzw. in oder aus eine in der Figur 1 dargestellte Wartungsposition zu verbringen. Es sind auch pneumatisch betätigte Endschalter vorgesehen. Des weiteren dargestellt ist eine Spülblockanordnung 34 in der Förderleitung 26 mit einer Anzahl von Ventilen. Hierdurch kann anstelle des von der Pumpvorrichtung 12 geförderten Mediums Druckwasser 22 oder Druckluft 24 direkt zur Elektrodenarmatur 4 zugeführt werden kann. Zwei weitere Anschlüsse 36 für weitere Medien, z. B. Heißdampf, organischer Reiniger oder ein weiteres Reinigungsmittel oder Kühlluft sind vorgesehen.

Figur 2 zeigt das Innere der Steuereinheit 10, wo die einzige Pumpvorrichtung 12 zur Förderung von Reinigungsflüssigkeit 16 und Kalibrierlösungen 18 und 20 untergebracht ist.

Die Steuereinheit 10 umfaßt ein Gehäuse 38, in dem Montageplatten untergebracht sind, etwa Montageplatten 40, welche eine Elektronikbaugruppe 42 tragen. Des weiteren dargestellt ist eine Piezo-Pneumatik-Ventilanordnung 44 für die Ansteuerung der Elektrodenarmatur 4.

Die Steuereinheit 10 setzt Befehle des Meßumformers 8, der die Zentrale der Meßanordnung darstellt, in pneumatische Signale zur Steuerung der Elektrodenarmatur 4 um. In der Steuereinheit 10 werden ferner Rückmeldungen über die Armaturenposition, also die Position der Elektroden, über den Füllstand in den Kanistern 14 sowie Überwachungsdaten für Druckluft 24 und Druckwasser 22 verarbeitet. Hingegen werden Meßsignale der Meßelektrode 2, die über das Elektrodenkabel 6 an den Meßumformer 8 gegeben werden, dort verarbeitet. Der Meßumformer 8 ist die Kommunikationszentrale der Einrichtung; er umfaßt einen Prozeßrechner oder ist mit einem Prozeßrechner und einer Eingabevorrichtung verbunden. Er steuert Regelstrecken und ist über eine bidirektionale Schnittstelle vom Typ RS 485 mit der Steuereinheit 10 verbunden, wo die Signale und Steuerbefehle des Prozeßrechners in pneumatische Größen zur Steuerung der Pumpvorrichtung 12 und zur Ansteuerung der Elektrodenarmatur 4 umgewandelt bzw. ausgeführt werden. Wie bereits erwähnt, werden aber auch Rückmeldungen, wie Armaturenposition, Kanisterfüllstand sowie Überwachung von Druckluft und Wasser über diese Schnittstelle an den Prozeßrechner gegeben.

Wie bereits angedeutet, führen von den Vorratsbehältern 14 Zuführleitungen 48 zu der einzigen Pumpvorrichtung 12. Weitere Zuführleitungen 48 führen Druckwasser 22 und Druckluft 24 zu. Der Anschluß der Zuführleitungen 48 an die Pumpvorrichtung 12 ist aus Figur 1 nicht ersichtlich. Figur 2 zeigt jedoch drei von insgesamt fünf konzentrisch auf einer Kreislinie angeordneten Anschlußstutzen 50 der Pumpvorrichtung 12, für die Zuführleitungen 48. Dies bedeutet, dass alle Zuführleitungen 48 in diese einzige Pumpvorrichtung 12, die nachfolgend im Einzelnen beschrieben werden wird, einmünden. Die Pumpvorrichtung 12 ist so ausgebildet, dass die fünf Anschlußstutzen 50 selektiv ansteuerbar sind, so dass die Pumpvorrichtung über die fünf Zuführleitungen 48 selektiv die jeweiligen Medien - Reinigungsflüssigkeit, Kalibrierlösungen, Druckluft, Wasser - über die gemeinsame Förderleitung 26 zur Elektrodenarmatur 4 fördern kann. Ein Pumpenausgang 52 führt innerhalb der konzentrisch angeordneten Anschlußstutzen 50 in Figur 2 nach unten weg und bildet einen abgewinkelten Anschluß für die Förderleitung 26.

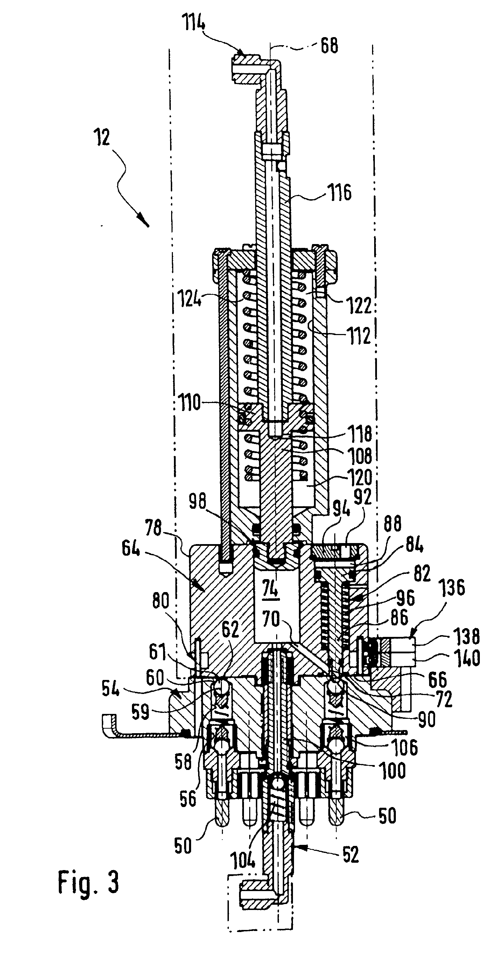

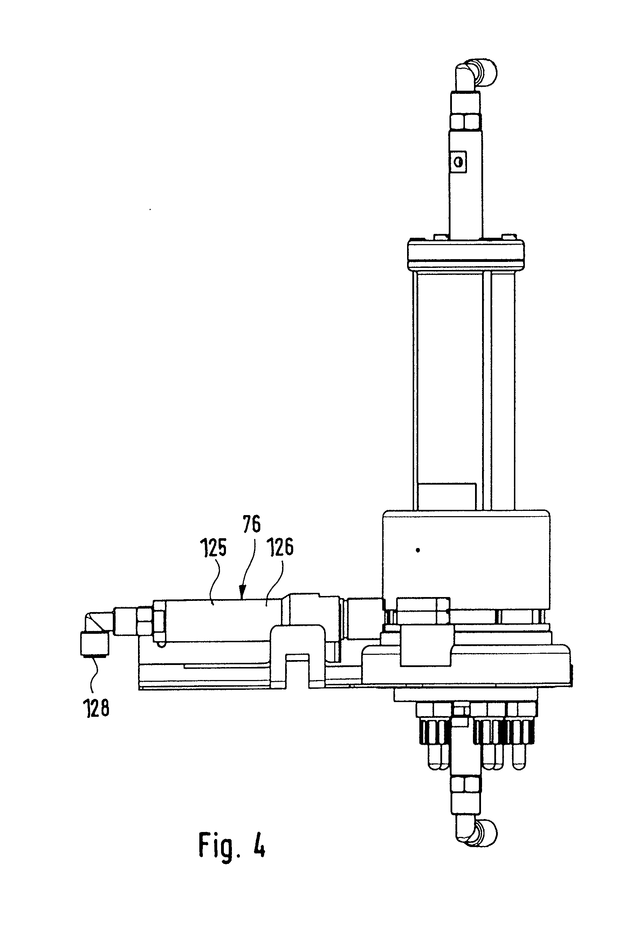

Aufbau und Arbeitsweise der einzigen Pumpvorrichtung 12 werden nachfolgend anhand der Figuren 3 und 4 erläutert: Die Figuren 3 und 4 zeigen eine Schnittansicht und eine Seitenansicht der einzigen und erfindungsgemäßen Pumpvorrichtung 12. Die Pumpvorrichtung 12 umfaßt ein erstes feststehendes Bauteil 54, in welches die Anschlußstutzen 50 als Einschraubteile in Axialbohrungen 56 eingeschraubt sind. Die jeweiligen Axialbohrungen 56 bilden in axialer Richtung verlaufende Durchgangskanäle 58 durch das erste Bauteil 54. Die Durchgangskanäle 58 verjüngen sich jedoch und bilden einen konusförmigen Ventilsitz 60 für einen Ventilkörper 59. Alle fünf Durchgangskanäle 58 münden jedoch im Anschluß an den jeweiligen Ventilsitz 60 in Form von Öffnungen 61 auf einer flanschförmigen Anschlußfläche 62 des ersten Bauteils 54. Die Pumpvorrichtung 12 umfaßt ein zweites gegenüber dem ersten Bauteil 54 drehbares Bauteil 64. Dieses zweite Bauteil 64 liegt mit einer zur Anschlußfläche 62 komplementären Anschlußfläche 66 gegen die Anschlußfläche 62 an.

In dem zweiten um eine Längsmittelachse 68 der Pumpvorrichtung 12 umdrehbaren zweiten Bauteil 64 ist ein Ansaugkanal 70 ausgebildet, der von einer Ansaugöffnung 72 in der Anschlußfläche 66 ausgehend nach radial innen, jedoch zur Längsmittelachse 68 schräg geneigt nach oben verläuft und in einer zentralen Zylinderkammer 74 mündet.

Durch Verdrehen des zweiten Bauteils 64 gegenüber dem ersten Bauteil 54 kann selektiv einer der Anschlußstutzen 50 und damit eine der Zuführleitungen 48 angesteuert werden, indem die Verdrehung so erfolgt, dass die Ansaugöffnung 72 des Ansaugkanals 70 mit den Öffnungen 61 der Durchgangskanäle 58 in der Anschlußfläche 62 koinzidieren, so dass eine Fluidkommunikation besteht. Die Verdrehung des zweiten Bauteils 64 gegenüber dem ersten Bauteil 54 erfolgt durch eine noch näher zu beschreibende Einrichtung 76, welche am Umfang 78 des zweiten Bauteils 64 vorgesehene Stege oder Stifte 80 ergreift und dadurch das zweite Bauteil 64 dreht.

Um eine Fluidkommunikation zwischen den Durchgangskanälen 58 in dem ersten Bauteil und dem Ansaugkanal 70 in dem zweiten Bauteil 64 zu erreichen, muß jedoch der Ventilkörper 59 von dem konischen Ventilsitz 60, also entgegen der Zuführrichtung, abgehoben werden. Dies erfolgt über eine Stösseleinrichtung 82, die ein pneumatisch ansteuerbares Kolbenmittel 84 und eine Stösselstange 86 umfaßt. Das Kolbenmittel 84 mit Stösselstange 86 ist in einer abgesetzten Axialbohrung 88 in dem zweiten drehbaren Bauteil 64 untergebracht, und zwar derart, dass das freie Ende 90 der Stösselstange 86 durch die Ansaugöffnung 72 hindurch über die Anschlußfläche 66 vorsteht. Das freie Ende kann dann nämlich in die Öffnung 61 des Durchgangskanals 58 hineinragen und den Ventilkörper 59 von seinem Ventilsitz 60 abheben, so dass eine Fluidkommunikation mit dem Ansaugkanal 70 besteht. Es sei erwähnt, dass das Kolbenmittel 84 mit Stösselstange 86 mit pneumatischem Steuerdruck beaufschlagt wird, der über eine Anschlußöffnung 92 in einem Deckel 94 durchgeführt wird, welcher Deckel 94 die Axialbohrung 88 druckdicht verschließt. Bei Wegnahme des pneumatischen Drucks wird das Kolbenmittel 84 und die Stösselstange 86 durch eine Feder 96 zurückgestellt, so dass der Ventilkörper 59 durch Federvorspannung wieder dichtend gegen den Ventilsitz 60 angelegt wird.

Wenn während Bestehens der Fluidkommunikation ein Ansaugund Verdrängerkolben 98 nach oben, also in die in Figur 3 dargestellte Position bewegt wird, so wird über den Ansaugkanal 70, den Durchgangskanal 58 und die Anschlußstutzen 50 das jeweilige fluide Medium aus der Zuführleitung 48 in die Zylinderkammer 74 angesaugt. Beim anschließenden Verdrängungshub des Kolbens 98 wird im wesentlichen das gesamte mit Fluid gefüllte Volumen der Zylinderkammer 74 über eine zentrale axiale Ausgangsleitung 100 zum Pumpenausgang 52 gefördert bzw. verdrängt. In der Ausgangsleitung 100 ist ein entgegen der Förderrichtung vorgespanntes Ventil 104 vorgesehen, dessen Schließkraft jedoch so bemessen ist, daß das Ventil 104 unter dem Verdrängungsdruck des Kolbens 98 öffnet. An das freie Ende des abgewinkelten Pumpenausgangs 52 wird dann die Förderleitung 26 angeschlossen.

Es sei erwähnt, dass während des Verdrängungshubs des Kolbens 98 zwar ohnehin das jeweilige in den Anschlußstutzen 50 vorgesehene Rückschlagventil 106 schließt, dass es sich aber dennoch als vorteilhaft erweist, wenn durch Zurückbewegen der Stösselstange 86 auch der Ventilkörper 59 wieder dichtend gegen seinen Ventilsitz 60 angelegt wird. Nach Ausführung des Verdrängungshubs kann dann nämlich eine weitere Zuführleitung 48 bzw. ein weiterer Anschlußstutzen 50 angesteuert werden, ohne dass in den Durchgangskanälen 58 vorhandenes fluides Medium in den Bereich zwischen die Anschlußflächen 62 und 66 austritt.

Der Ansaug- und Verdrängerkolben 98 ist über ein in axialer Richtung verlaufendes Kolbenstangenmittel 108 mit einem weiteren Steuerkolben 110 verbunden, der in einem Steuerzylinder 112 bewegbar ist. Der Steuerzylinder 112 ist in Axialrichtung auf der dem ersten Bauteil 54 gegenüberliegenden Seite des zweiten Bauteils 64 angeordnet. Der Steuerzylinder 112 wird über einen axial dem Pumpenausgang 52 gegenüberliegenden pneumatischen Anschluß 114 angesteuert. Der pneumatische Anschluß 114 führt Druckluft über ein mit dem Steuerkolben 110 verschraubtes Rohr 116 durch den Steuerkolben 110 hindurch und über eine Querbohrung 118 in einen dem ersten Bauteil 64 zugewandten Teil 120 des Steuerzylinders 112, so dass bei Druckbeaufschlagung der Steuerkolben 110 und mit ihm das Kolbenstangenmittel 108 und der Ansaug- und Verdrängerkolben 98 nach oben, also in Ansaugrichtung, bewegt wird. In dem anderen Teil 122 des Steuerzylinders 112 ist eine Rückstellfeder 124 untergebracht, die sich gegen eine Kolbenseite des Steuerkolbens 110 abstützt und diesen bei Wegnahme des Drucks nach unten, also in Verdrängerrichtung, bewegt, wodurch der Verdrängungshub des Kolbens 98 ausgeführt wird.

Es sei erwähnt, dass die Stösseleinrichtung 82 im selben Takt mit Druckluft beaufschlagt wird wie der pneumatische Anschluß 114 und damit der Steuerkolben 110. Dies hat zur Folge, dass stets im Moment des Ansaughubs des Kolbens 98 auch der betreffende Ventilkörper 59 von seinem Ventilsitz 60 abgehoben ist, so dass eine Fluidkommunikation besteht. Beim anschließenden Verdrängungshub hingegen ist das freie Ende der Stösselstange 86 wieder hinter die Anschlußfläche 66 zurückgezogen, so dass der Ventilkörper 59 wieder dichtend gegen seinen Ventilsitz 60 anliegt.

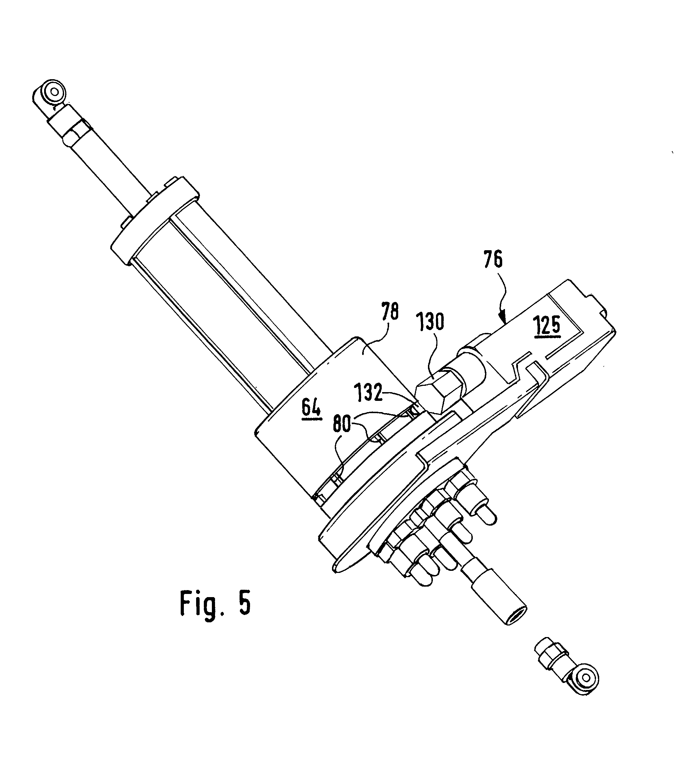

Es sei nun die bereits erwähnte Einrichtung 76 zum Verdrehen des zweiten Bauteils 64 gegenüber dem ersten feststehenden Bauteil 54 erläutert: Wie aus Figur 4 zu erkennen ist, umfaßt die Einrichtung 76 eine pneumatische Stelleinrichtung 125 mit einem pneumatischen Zylinder 126 mit Druckluftanschluß 128 und einem im Inneren des Zylinders 126 linear verschiebbaren Stellmittel 130. Wie aus der perspektivischen Darstellung der Figur 5 ersichtlich, ist die Stellrichtung des Stellmittels 130 tangential zur Umdrehungsrichtung und zum Umfang 78 des zweiten Bauteils 64 gerichtet. Das Stellmittel 130 weist auf seiner dem Umfang 78 des drehbaren Bauteils 64 zugewandten Seite zahnstangenartige Mitnahmemittel 132 auf, welche die schon erwähnten Stege oder Stifte 80 am Umfang 78 des Bauteils 64 ergreifen und infolge der Stellbewegung des Stellmittels 130 das Bauteil 64 um die Längsmittelachse 68 drehen.

Des weiteren ist eine Positionskontrollvorrichtung 136 vorgesehen (Figur 3), die zwei übereinander angeordnete Mikroschalter 138, 140 für Positionsrückmeldungen und für die Nullstellung umfaßt.

Wenn nach vorbestimmten Programmen ein Wartungsprozeß durchgeführt wird, so wird ein entsprechender Befehl von dem Prozeßrechner des Meßumformers 8 an die Steuereinheit 10 gegeben, und von dort aus wird über die pneumatischen Steuerleitungen 30 die Meßelektrode 2 von ihrer Betriebsposition in die in Figur 1 dargestellte Wartungsposition verfahren. Es kann dann durch selektive Ansteuerung der Zuführleitungen 48 ein Wartungsprogramm, wie es eingangs erwähnt wurde, durchgeführt werden. Hierzu wird über die pneumatische Stelleinrichtung 125 das Bauteil 64 gegenüber dem Bauteil 54 so verdreht, dass ein betreffender Anschlußstutzen 50 und damit über die betreffende Zuführleitung 48 ein bestimmter Vorratsbehälter 14 angesteuert wird. Es ist aber auch möglich, dass zunächst eine Spülung mit Druckwasser 22 durchgeführt wird und erst dann der Vorratsbehälter 14 mit der Reinigungsflüssigkeit 16 angesteuert und über die einzige Pumpvorrichtung 12 und die Förderleitung 26 zur Spülkammer 28 der Elektrodenarmatur 4 geleitet wird.

Über den Prozeßrechner können Reinigungs- oder Kalibrierprogramme an die jeweiligen Anforderungen frei angepaßt werden. Reinigungs- und Kalibriermedien können gewählt werden, gegebenenfalls können zusätzliche Medien über die Spülblockanordnung 9 zugeführt werden, die Anzahl und die Reihenfolge der Schritte können nach Belieben variiert werden).

Die Wartungsprozesse können beispielsweise programmgesteuert nach vorgebbaren Zeitintervallen ausgeführt werden. Es ist aber auch möglich, dass eine Sensorprüf-Einrichtung in dem Meßumformer betrieben wird, der bei einer zu raschen Abweichung des Sensors ein Signal zur Durchführung eines Wartungsprozesses gibt, und dass dann im Anschluß hieran ein solcher Wartungsprozeß ausgeführt wird. Des weiteren ist es denkbar, dass nach jedem Netzspannungsausfall automatisch ein Wartungsprozeß durchgeführt wird.

## Patentansprüche

1. Automatisierbare Meß-, Reinigungs- und Kalibriereinrichtung für pH-Elektroden oder Elektroden zur Messung von Redoxpotentialen, insbesondere in der Prozeßtechnik, mit einer Elektrodenarmatur (4), welche die Meßelektrode (2) in einer Betriebsposition oder in einer Wartungsposition hält, wobei die Elektrode (2) in der Wartungsposition in einer Spülkammer (28) aufgenommen ist, in welcher ein Reinigungs- und Kalibriervorgang durchführbar ist, und mit einer Pumpvorrichtung (12) zum Zuführen von Reinigungsflüssigkeit (16) und Kalibrierlösungen (18, 20) zur Spülkammer (28) über eine die Pumpvorrichtung (12) und die Spülkammer (28) verbindende Förderleitung (26),
**dadurch gekennzeichnet,**
**dass** die Pumpvorrichtung (12) mehrere Zuführungen (48) auf ihrer Ansaugseite umfasst, dass eine Einrichtung (76) zum selektiven Ansteuern einer jeweiligen Zuführung (48) vorgesehen ist und dass die über die jeweiligen Zuführungen (48) selektiv zur Pumpvorrichtung (12) geleiteten Medien (Reinigungsflüssigkeit, Kalibrierlösung, etc) über die gemeinsame Förderleitung (26) zur Spülkammer (28) gelangen.

2. Einrichtung nach Anspruch 1, **dadurch gekennzeichnet, dass** die Elektrodenarmatur (4) eine Wechselarmatur ist, welche die Meßelektrode (2) zwischen der Betriebsposition und der Wartungsposition verbringt.

3. Einrichtung nach Anspruch 1 oder 2, **dadurch gekennzeichnet, dass** die mehreren Zuführungen (48) ein erstes Leitungsmittel zum Zuführen einer Reinigungsflüssigkeit (16) und ein zweites und drittes Leitungsmittel zum Zuführen einer ersten und einer zweiten Kalibrierlösung (18, 20) umfassen.

4. Einrichtung nach Anspruch 1, 2 oder 3, **dadurch gekennzeichnet, dass** die Pumpvorrichtung (12) eine Dosierpumpvorrichtung ist, mit der definierte Mengen zur Spülkammer (28) zuführbar sind.

5. Einrichtung nach einem der vorstehenden Ansprüche, **dadurch gekennzeichnet, dass** die Pumpvorrichtung (12) ein erstes mit den mehreren Zuführungen (48) verbindbares Bauteil (54) umfasst, welches je Zuführung eine Öffnung (61) aufweist, welche Öffnungen (61) selektiv mit einem Ansaugkanal (70) der Pumpvorrichtung (12) verbindbar sind.

6. Einrichtung nach einem der vorstehenden Ansprüche, **dadurch gekennzeichnet, dass** die Einrichtung (76) zum selektiven Ansteuern einer jeweiligen Zuführung (48) ein gegenüber dem ersten Bauteil (54) verstellbares zweites Bauteil (64) aufweist, welches den Ansaugkanal (70) umfasst, und dass das erste und das zweite Bauteil (54, 64) derart gegeneinander verstellbar sind, dass eine Ansaugöffnung (72) des Ansaugkanals (70) selektiv mit einer jeweiligen Zuführung (48) verbindbar ist.

7. Einrichtung nach Anspruch 5 oder 6, **dadurch gekennzeichnet, dass** das erste Bauteil (54) ein feststehendes Bauteil ist.

8. Einrichtung nach Anspruch 5, 6 oder 7, **dadurch gekennzeichnet, dass** das zweite Bauteil (64) ein bewegbares Stellteil ist.

9. Einrichtung nach einem der Ansprüche 5-8, **dadurch gekennzeichnet, dass** das erste und das zweite Bauteil (54, 64) gegeneinander verdrehbar sind.

10. Einrichtung nach einem der Ansprüche 5-9, **dadurch gekennzeichnet, dass** der Ansaugkanal (70) gegenüber einer Drehachse (68) geneigt ist.

11. Einrichtung nach einem der Ansprüche 5-10, **dadurch gekennzeichnet, dass** die Öffnungen (61) in dem ersten Bauteil (54) konzentrisch zur Drehachse (68) angeordnet sind.

12. Einrichtung nach einem der Ansprüche 5-11, **dadurch gekennzeichnet, dass** das erste und das zweite Bauteil (54, 64) flanschförmige, gegeneinander anliegende und insbesondere gegeneinander verdrehbare Kontaktflächen (62, 66) aufweisen, in denen die Öffnungen (61) des ersten Bauteils (54) und die Ansaugöffnung (72) des zweiten Bauteils (64) münden.

13. Einrichtung nach einem der Ansprüche 5-12,
**dadurch gekennzeichnet, dass** eine Verdrehung der Bauteile (54, 64) gegeneinander durch eine Stelleinrichtung (76) erreichbar ist.

14. Einrichtung nach Anspruch 13, **dadurch gekennzeichnet, dass** die Stelleinrichtung (76) ein linear bewegbares Stellmittel (130) umfasst, dessen Stellbewegung etwa tangential zur Drehbarkeit des einen Bauteils (64) verläuft und dieses um eine oder mehrere Drehstellung(en) weiterstellt.

15. Einrichtung nach einem oder mehreren der vorstehenden Ansprüche, **dadurch gekennzeichnet, dass** die Einrichtung (76) zum selektiven Ansteuern einer jeweiligen Zuführung (48) eine Positionskontrollvorrichtung (136) umfasst, mit der die Stellung des ersten und zweiten Bauteils (54, 64) zueinander bestimmbar ist.

16. Einrichtung nach einem oder mehreren der vorstehenden Ansprüche, **dadurch gekennzeichnet, dass** die Öffnungen (61) des ersten Bauteils (54) von in Schließrichtung vorgespannten Ventilen verschließbar sind, die öffenbar sind, wenn die betreffende Zuführung (48) angesteuert wird.

17. Einrichtung nach Anspruch 16, **dadurch gekennzeichnet, dass** die Ventile Ventilkörper (59) umfassen, die entgegen der Zuführrichtung von einem Ventilsitz (60) abhebbar sind, wenn die betreffende Zuführung angesteuert wird.

18. Einrichtung nach einem oder mehreren der vorstehenden Ansprüche, **dadurch gekennzeichnet, dass** eine Stößeleinrichtung (82) in dem zweiten Bauteil (64) im Bereich der Ansaugöffnung (72) des Ansaugkanals (70) vorgesehen ist, welche den Ventilkörper (59) von seinem Ventilsitz (60) abhebt.

19. Einrichtung nach einem oder mehreren der vorstehenden Ansprüche, **dadurch gekennzeichnet, dass** der Ansaugkanal (70) nach radial innen verläuft und dort in eine Zylinderkammer (74) mündet, in der ein Ansaug- und Verdrängerkolben (98) bewegbar ist.

20. Einrichtung nach einem oder mehreren der vorstehenden Ansprüche, **dadurch gekennzeichnet, dass** ein Ansaug- und Verdrängerkolben (98) über ein Kolbenstangenmittel (108) mit einem in einem pneumatischen Steuerzylinder (112) bewegbaren Steuerkolben (110) antriebsverbunden ist.

21. Einrichtung nach Anspruch 20, **dadurch gekennzeichnet, dass** der Steuerkolben (110) in Verdrängungsrichtung des Ansaug- und Verdrängerkolbens (98) federvorgespannt ist.
